# EUROPEAN PATENT APPLICATION

(11) **EP 3 249 253 A1**
(43) Date of publication of application: **29.11.2017**
(21) Application number: 17169927.5
(22) Date of filing: 08.05.2017
(51) Int. Cl.: F16D 3/38

(54) **UNIVERSAL JOINT YOKE AND INTERMEDIATE SHAFT**

(30) Priority: 18.05.2016 JP 2016099785
(71) Applicant: JTEKT CORPORATION, Osaka-shi, Osaka 542-8502 (JP)
(72) Inventor: KOYAMA, Takeshi, Osaka-shi, Osaka 542-8502 (JP); TSUJI, Naoki, Osaka-shi, Osaka 542-8502 (JP); NAKAYAMA, Kazunori, Osaka-shi, Osaka 542-8502 (JP); SHIBATA, Nobuaki, Osaka-shi, Osaka 542-8502 (JP); YOSHIDA, Atsuhiro, Osaka-shi, Osaka 542-8502 (JP)
(74) Representative: Winter, Brandl, Fürniss, Hübner, Röss, Kaiser, Polte - Partnerschaft mbB

(57) **Abstract**

A first yoke includes a tubular portion extending in a first direction, a flange, and a pair of arms extending from the flange. Support holes for a joint spider are formed at tips of the respective arms. The arms have respective inner surfaces facing each other in a second direction. Each of the inner surfaces includes a first recessed portion and a second recessed portion as viewed in a third direction orthogonal to the first direction and the second direction. The first recessed portions are recessed such that the distance between the inner surfaces of the arms increases from a start end located closer to an opening edge of each support hole toward an end point located closer to a base end of the arm. Each of the second recessed portions connects the end point to an end surface of a flange so as to form a curved surface.

## Description

### BACKGROUND OF THE INVENTION

### 1. Field of the Invention

The invention relates to a universal joint yoke and an intermediate shaft.

### 2. Description of the Related Art

In general, in an automobile, a steering shaft coupled to a steering wheel is coupled via an intermediate shaft to, for example, a pinion shaft serving as a steering gear shaft. Typically, the intermediate shaft includes universal joints provided at opposite ends of a telescopic middle shaft.

The intermediate shaft has a function to contract at the time of a vehicle collision. Thus, a bend angle of a universal joint (a crossed axes angle between central axes of a pair of shafts connected together via the universal joint) needs to be larger than the bend angle formed during normal operation (the angle needs to be, for example, approximately 60 degrees). Japanese Patent Application Publication No. H10-205547 (JP H10-205547 A) proposes a universal joint yoke as a technique for suppressing interference between a pair of arms of a universal joint. The universal joint yoke has circular holes that are formed in respective arms of a yoke and in which bearing cups are fitted. Vicinities of the circular holes that are located closer to tips of the respective arms are circular arc portions each shaped like a circular arc in section and having cylindrical recessed surfaces as facing surfaces. Intermediate portions of the arms are flat portions that are parallel to each other.

Japanese Utility Model Application No. 2553096 proposes a technique for forming, on circumferentially opposite sides of a tip edge of an outer peripheral surface of each coupling arm, recessed portions that are recessed with respect to an outer periphery of the coupling arm, using a forging die.

Another technique has been proposed. In the technique, when an intermediate shaft is delivered to an assembly line for a vehicle body as a subassembly, one of the yokes of one of the universal joints is supported, with the remaining part of the intermediate shaft suspended. In this case, the universal joints need to have a large bend angle of, for example, 90°. This requirement fails to be met by the improved shape of the tip of the arm as disclosed in JP H10-205547 A or Japanese Utility Model Application No. 2553096. Interference has been found to occur at a part of an inner surface of the arm that is close to a base end of the arm when the bend angle is large.

### SUMMARY OF THE INVENTION

An object of the invention is to provide a universal joint yoke and an intermediate shaft that allow possible interference with a mating yoke to be suppressed even when the universal joint yoke has a large bend angle.

A universal joint yoke in an aspect of the invention includes a tubular portion to which a shaft is coupled, a slit extending from a first end of the tubular portion in an axial direction of the tubular portion that is designated as a first direction, a flange extending outward from a second end of the tubular portion in a radial direction of the tubular portion, and a pair of arms extending from the flange in a direction away from the tubular portion and coupled to a mating yoke via a joint spider so as to be able to swing. The arms each have a plate shape and the arms have respective inner surfaces facing each other in a second direction orthogonal to the first direction and respective outer surfaces opposite to the inner surfaces. Each of the arms includes a base end connected to the flange and a tip portion. Each of the arms is provided with a support hole that is a through-hole formed at the tip portion to support the joint spider via a bearing fitted to a corresponding shaft portion of the joint spider. The support hole in each of the arms has a central axis extending in the second direction. The inner surface of each of the arms includes a first recessed portion that is recessed such that a distance between the inner surfaces of the arms increases from a start point located closer to an opening edge of the support hole toward an end point located closer to the base end of the arm, and includes a curved second recessed portion that connects the end point and an end surface of the flange together, as seen in a third direction orthogonal both to the first direction and to the second direction.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram of a steering system to which an intermediate shaft including a universal joint yoke in an embodiment of the invention is applied;
FIG. 2 is a locally exploded side view of the intermediate shaft;
FIG. 3 is a schematic perspective view of a first yoke serving as a universal joint yoke; and
FIG. 4A is a schematic front view of the first yoke, and FIG. 4B is a sectional view taken along line IVb-IVb in FIG. 4A.

### DETAILED DESCRIPTION OF EMBODIMENTS

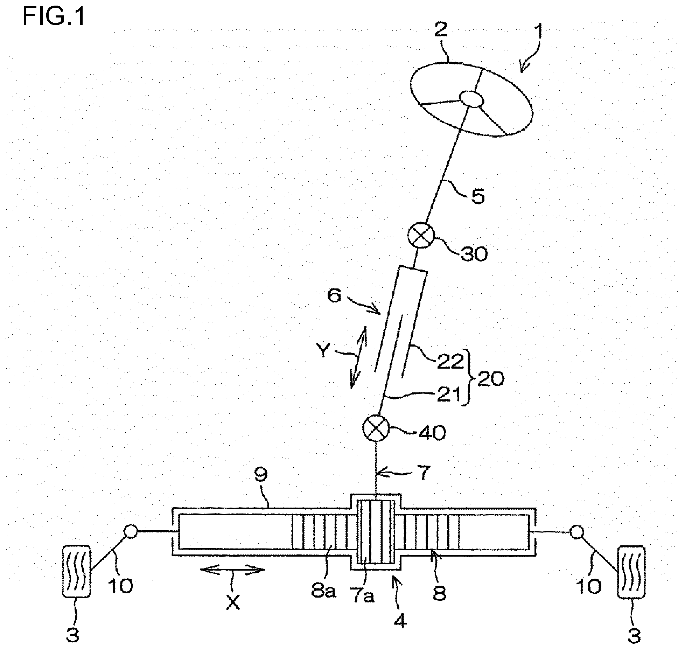

An embodiment of the invention will be described below in accordance with the drawings. FIG. 1 is a schematic diagram of a steering system 1 to which an intermediate shaft 6 including a universal joint yoke in an embodiment of the invention is applied. As depicted in FIG. 1, the steering system 1 includes a steering member 2 such as a steering wheel and a steering operation mechanism 4. The steering operation mechanism 4 steers steered wheels 3 in conjunction with rotation of the steering member 2.

The steering system 1 includes a steering shaft 5 and an intermediate shaft 6. The steering member 2 is integrally rotatably coupled to one end of the steering shaft 5.

The steering operation mechanism 4 includes, for example, a rack-and-pinion mechanism. Specifically, the steering operation mechanism 4 includes a pinion shaft 7 and a rack shaft 8. A pinion 7a of the pinion shaft 7 is meshed with a rack 8a of the rack shaft 8.

The rack shaft 8 is supported in a rack housing 9 fixed to a vehicle body, so as to be movable in an axial direction X via a plurality of bearings not depicted in the drawings. Opposite ends of the rack shaft 8 protrude toward respective sides of the rack housing 9, and couple to respective rods 10. The tie rods 10 are coupled to the corresponding steered wheels 3 via respective knuckle arms not depicted in the drawings.

The intermediate shaft 6 is interposed between the steering shaft 5 and the pinion shaft 7 to couple the steering shaft 5 and the pinion shaft 7 together. When the steering member 2 is operated to rotate the steering shaft 5, rotation of the steering shaft 5 is transmitted to the pinion shaft 7 via the intermediate shaft 6. The rotation is converted by the pinion 7a and the rack 8a into motion of the rack shaft 8 in the axial direction X along a lateral direction of an automobile to achieve steering of the steered wheels 3.

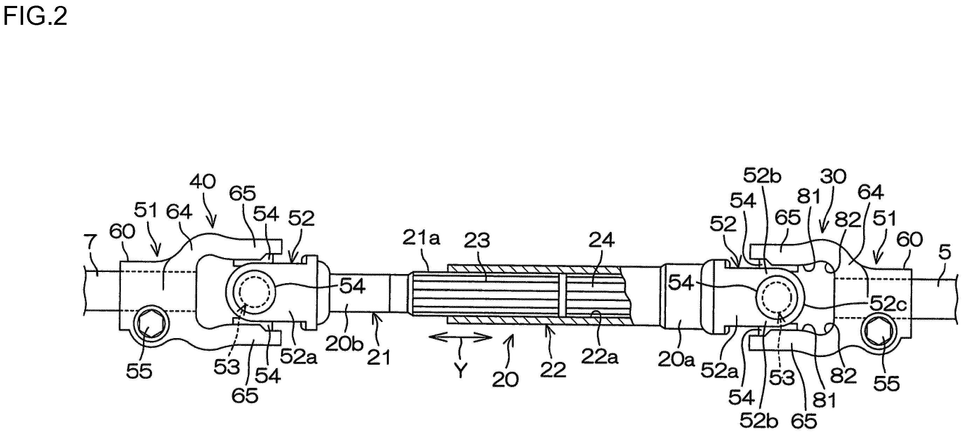

The intermediate shaft 6 includes a telescopic middle shaft 20, a first universal joint 30, and a second universal joint 40. The first universal joint 30 is provided at a first end 20a of the middle shaft 20 in an axial direction Y thereof. The second universal joint 40 is provided at a second end 20b of the middle shaft 20 in the axial direction Y thereof. FIG. 2 is a locally exploded schematic side view of the intermediate shaft 6. As depicted in FIG. 2, the middle shaft 20 includes an inner shaft that is, for example, a lower shaft and a tubular outer shaft 22 that is, for example, an upper shaft. An external spline 21a is formed on an outer periphery of the inner shaft 21. An internal spline 22a is formed on an inner periphery of the outer shaft 22 such that the external spline 21a is fitted to the internal spline 22a. The inner shaft 21 and the outer shaft 22 are spline-fitted together so as to be slidable relative to each other in the axial direction Y. Consequently, the middle shaft 20 is telescopic in the axial direction Y.

The first universal joint 30 includes a first yoke 51 and a joint spider 53. The second universal joint 40 includes a second yoke 52 and a joint spider 53. The first yoke 51 is coupled to the steering shaft 5 and fixed thereto by a tie bolt 55. The second yoke 52 is coupled to the pinion shaft 7 and fixed thereto by a tie bolt 55. The joint spider 53 couples the first yoke 51 and the second yoke 52 together. To the second yokes 52, corresponding ends 20a, 20b of the middle shaft 20 are coupled. The first yoke 51 includes a pair of arms 65. The second yoke 52 includes a pair of arms 52a (FIG. 2 depicts only one of the arms 52a).

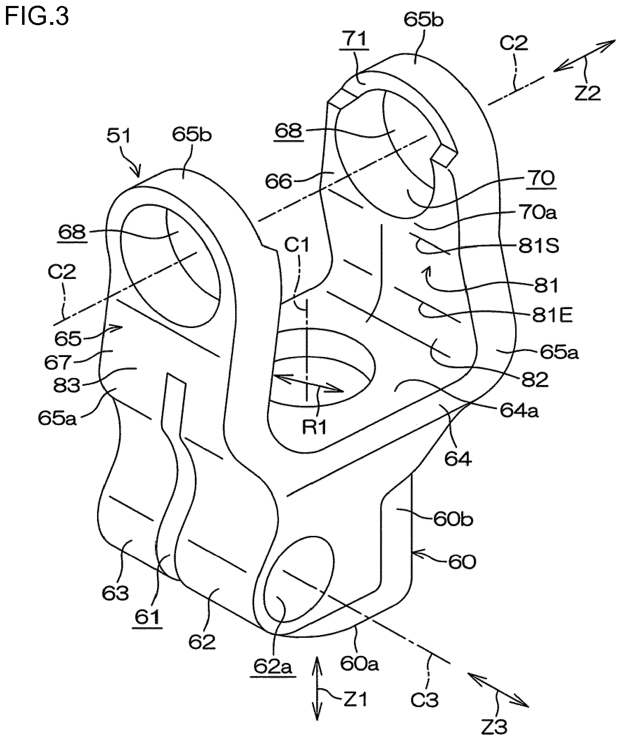

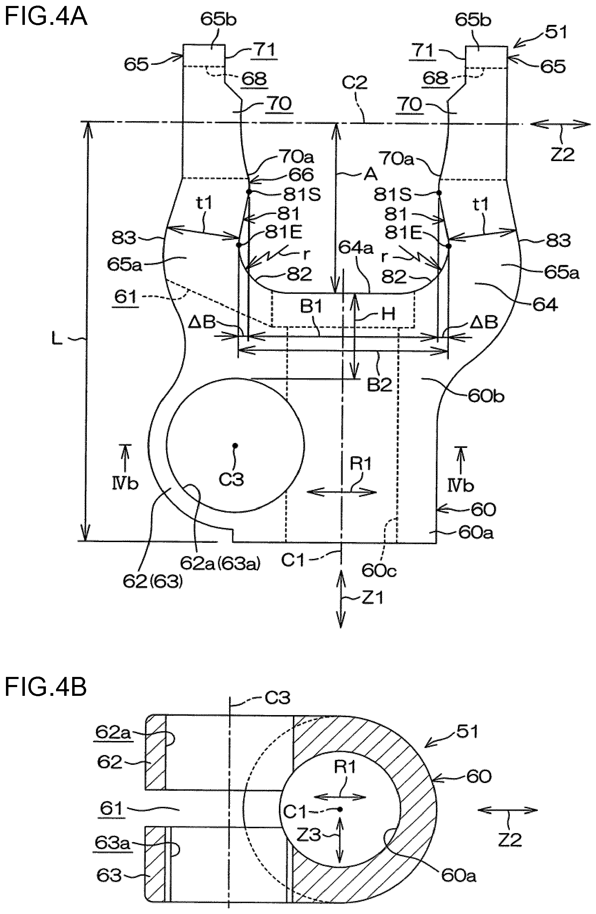

Shaft portions (not depicted in the drawings) of the joint spiders 53 are rotatably supported by the corresponding arms 65, 52a of the corresponding yokes 51, 52 via respective bearings 54. The first universal joint 30 and the second universal joint 40 have a common configuration, and thus, the first yoke 51 of the first universal joint 30 will be described below. FIG. 3 is a schematic perspective view of the first yoke 51. FIG. 4A is a schematic front view of the first yoke 51, and FIG. 4B is a sectional view taken along line IVb-IVb in FIG. 4A.

As depicted in FIG. 3, FIG. 4A, and FIG. 4B, the first yoke 51 includes a tubular portion 60 to which a shaft is coupled and which has a central axis C1. The tubular portion 60 has a first end 60a and a second end 60b in an axial direction Z1 (hereinafter referred to as the first direction Z1) of the tubular portion 60. The tubular portion 60 is penetrated in the first direction Z1. Internal serrations (not depicted in the drawings) are formed on an inner peripheral surface 60c of the tubular portion 60 such that external serrations (not depicted in the drawings) on an outer periphery of an end of the steering shaft 5 are fitted to the internal serrations.

The tubular portion 60 has a slit 61 extending parallel to the first direction Z1 from the first end 60a. The tubular portion 60 is provided with a pair of clamping portions 62, 63 facing each other across the slit 61. The clamping portions 62, 63 extend parallel to the first direction Z1 and outward of the tubular portion 60 in a radial direction R1 thereof. The clamping portion 62 is provided with a bolt insertion hole 62a, and the clamping portion 63 is provided with a threaded hole 63a. The bolt insertion hole 62a and the threaded hole 63 a have a common central axis C3.

The tie bolt 55 depicted in FIG. 2 is screw-threaded into the threaded hole 63a through the bolt insertion hole 62a depicted in FIG. 4B. Consequently, the tubular portion 60 is reduced in diameter via the clamping portions 62, 63 to fixedly clamp the steering shaft 5 inserted into the tubular portion 60. As depicted in FIG. 3 and FIG. 4A, the first yoke 51 has an annular flange 64 extending outward from the second end 60b of the tubular portion 60 in the radial direction R1 thereof and in a direction orthogonal to the first direction Z1. The first yoke 51 has the arms 65 extending from the flange 64 toward a side away from the tubular portion 60.

The arms 65, the flange 64, and the tubular portion 60 are integrally formed of a single material, for example, steel. The first yoke 51 is thus configured. The first yoke 51 is a forging. The arms 65 each have a plate shape and are parallel to the first direction Z1. The arms 65 are spaced from each other so as to face each other in a second direction Z2 orthogonal to the first direction Z1. The arms 65 are identically shaped. The arms 65 include respective inner surfaces 66 facing each other in the second direction Z2 and respective outer surfaces 67 opposite to the corresponding inner surfaces 66. Each of the arms 65 has a base end 65a located closer to the flange 64 and a tip portion 65b located opposite to the base end 65a.

The arms 65 are coupled via the joint spider 53 to the second yoke 52 serving as a mating yoke as depicted in FIG. 2 such that the arms 65 can swing with respect to the second yoke 52. Each of the arms 65 is provided with a support hole 68 (see also FIG. 3) that is a through-hole that supports the joint spider 53 via the bearing 54 fitted to a corresponding shaft portion (not depicted in the drawings) of the joint spider 53. As depicted in FIG. 3 and FIG. 4A, the support hole 68 is formed at the tip portion 65b of the arm 65. The support hole 68 has a central axis C2 extending in the second direction Z2. The support holes 68 in the arms 65 are concentrically arranged. The support hole 68 has an opening 70 formed in the inner surface 66. In an opening edge 70a in the inner surface 66 that annularly surrounds the opening 70, a part of the opening edge 70a corresponding to the tip portion 65b is provided with a circular-arc-shaped recessed portion 71.

FIG. 4A corresponds to a front view of the first yoke 51 as seen in a third direction Z3 orthogonal both to the first direction Z1 and to the second direction Z2. As depicted in FIG. 4A, the inner surface 66 of each arm 65 includes a first recessed portion 81 and a second recessed portion 82 as viewed in the third direction Z3 (the direction orthogonal to the direction of the sheet of FIG. 4A) (see also FIG. 3).

The first recessed portion 81 is recessed such that the distance between the inner surfaces 66 of the arms 65 increases with respect to the second direction Z2 from a start point 81S located closer to the opening edge 70a of the support hole 68 toward the end point 81E located closer to the base end 65a of the arm 65. Specifically, the first recessed portions 81 of the arms 65 are formed of inclined surfaces inclined in opposite directions with respect to the first direction Z1.

When a maximum recessed amount of each first recessed portion 81 (the recessed amount at the end point 81E) is denoted as ΔB, a distance B2 between the end points 81E of the first recessed portions 81 of the arms 65 is 2 × ΔB larger than a distance B1 between the start points 81S of the first recessed portions 81 of the arms 65 (B2 = B1 + 2 × ΔB). That is, the first recessed portion 81 formed on each arm 65 allows the space between the inner surfaces 66 of the arms 65 to flare toward the flange 64.

Thus, when a bend angle (90°) is large, the first recessed portion 81 is restrained from being subjected to interference by a side edge 52b of the corresponding arm 52a of the second yoke 52 that is the mating yoke as depicted in FIG. 2. In this case, the maximum recessed amount ΔB for each first recessed portion 81 with respect to the second direction Z2 may be determined based on a forging variation or the size of a parting line. The maximum recessed amount ΔB is set to, for example, 0.2 mm to 4 mm.

A position in the support hole 68 where the bearing 54 is fitted with respect to the direction of the central axis C2 of the support hole 68 (the second direction Z2 that is the direction in which the arms 65 face) tends to vary due to an assembly error. Correspondingly, the position of each arm 52a of the second yoke 52 may also vary in the second direction Z2. Even in that case, formation of the first recessed portion 81 allows the side edge 52b of each arm 52a of the mating second yoke 52 to be restrained from interfering with the corresponding inner surface 66 of the first yoke 51.

As depicted in FIG. 4A, the second recessed portion 82 is formed into a recessed curved surface shaped like a curved chamfer to connect the end point 81E of the first recessed portion 81 to an end surface 64a of the flange 64. The curved second recessed portion 82 is connected to the first recessed portion 81 with the maximum recessed amount ΔB. This increases the distance between the second recessed portion 82 and a curved tip edge 52c of each arm 52a of the second yoke 52 serving as the mating yoke as depicted in FIG. 2. Consequently, when the bend angle is large (90°), the second recessed portion 82 and the curved tip edge 52c are restrained from interfering with each other. Thus, the curved tip edge 52c may remain a forging surface, eliminating the need for machining.

The second recessed portion 82 is assumed to be omitted under the condition that a distance L between the central axis C2 of the support holes 68 and an end surface of the first end 60a of the tubular portion 60 with respect to the first direction Z1 is fixed as depicted in FIG. 4A. Under this assumption, to avoid interference with the curved tip edge 52c of each arm 52a of the second yoke 52 that is the mating yoke, a distance A between the central axis C2 and an end surface 64a of the flange 64 with respect to the first direction Z1 needs to be increased. However, an increase in distance A reduces the distance H between the end surface 64a of the flange 64 and the bolt insertion hole 62a with respect to the first direction Z1 by an amount equal to the increase in distance A, possibly decreasing the strength of the yoke.

In contrast, in the present embodiment, formation of the second recessed portion 82 increases the distance between the second recessed portion 82 and the curved tip edge 52c of each arm 52a of the second yoke as depicted in FIG. 2. Thus, in FIG. 4A, the distance A need not be increased under the condition that the distance L is fixed, thus allowing an adequate distance H to be obtained. Consequently, even with a small size, an adequate strength can be provided.

The curved second recessed portion 82 can be restrained from interfering with the curved tip edge 52c of the mating second yoke 52 without the need to excessively reduce a radius of curvature r. Specifically, the radius of curvature r of the second recessed portion 82 is set to, for example, 5 to 8 mm by thermal forging, allowing the life of the forging die to be extended. The first recessed portion 81 and the second recessed portion 82 are formed of a forging surface or an alternative mold forming surface. That is, the first recessed portion 81 and the second recessed portion 82 are formed with a die and not by machining.

The outer surface 67 of each arm 65 includes a projecting portion 83 that is located on the back side of the first recessed portion 81 and the second recessed portion 82 and that projects outward like a protruding curve as viewed in the third direction Z3. In the first yoke 51 that is the universal joint yoke in the present embodiment, the inner surface 66 of each of the arms 65 is provided with the first recessed portion 81 that is recessed such that the distance between the inner surfaces 66 of the arms 65 increases from the start point 81S located closer to the opening edge 70a of the support hole 68 toward the end point 81E located closer to the base end 65 a of the arm 65, and also provided with the curved second recessed portion 82 that connects the end point 81E of the first recessed portion 81 to the end surface 64a of the flange 64.

Formation of both recessed portions 81, 82 allows the space between the inner surfaces 66 of the arms 65 to flare toward the flange 64 as depicted in FIG. 4A. Thus, when the present embodiment is used for a universal joint that needs a large bend angle (for example, 90°), the arms 65 can be restrained from interfering with the arms 52a of the mating yoke (second yoke 52).

The projecting portion 83 is provided on each of the outer surfaces 67 on the back side of both recessed portions 81, 82 of the inner surface 66 of the corresponding arm 65. Consequently, regardless of whether the both recessed portions 81, 82 are provided on the inner surface 66 of each arm 65, a decrease in the thickness t1 of the arm 65 is suppressed to provide the arm 65 with an adequate strength as depicted in FIG. 4A. Both recessed portions 81, 82 are formed of a forging surface, thus eliminating the need to machine both the recessed portions 81, 82 to reduce manufacturing costs.

The universal joint yoke includes the first yoke 51 provided with both the recessed portions 81, 82, thus enabling an increase in the bend angle of the intermediate shaft 6. The invention is not limited to the above-described embodiment. For example, the projecting portion 83 may be omitted from the outer surfaces 67, which may be formed of a flat surface that is parallel to the first direction Z1, if this poses no problem with the strength under service conditions.

Both recessed portions 81, 82 may be formed of a casting surface instead of a forging surface and may be formed of, for example, a resin molding surface of CFRP (Carbon Fiber Reinforced Plastics). In any case, the need for machining is eliminated, enabling a reduction in manufacturing costs. The first yoke serving as the universal joint yoke in the invention may be applied exclusively to one of the first universal joint 30 and the second universal joint 40.

Various other changes may be made to the invention within the scope recited in claims.

## Claims

1. A universal joint yoke comprising:
a tubular portion to which a shaft is coupled;
a slit extending from a first end of the tubular portion in an axial direction of the tubular portion that is designated as a first direction;
a flange extending outward from a second end of the tubular portion in a radial direction of the tubular portion; and
a pair of arms extending from the flange in a direction away from the tubular portion and coupled to a mating yoke via a joint spider so as to be able to swing, wherein
the arms each have a plate shape and the arms have respective inner surfaces facing each other in a second direction orthogonal to the first direction and respective outer surfaces opposite to the inner surfaces,
each of the arms includes a base end connected to the flange and a tip portion,
each of the arms is provided with a support hole that is a through-hole formed at the tip portion to support the joint spider via a bearing fitted to a corresponding shaft portion of the joint spider,
the support hole in each of the arms has a central axis extending in the second direction,
the inner surface of each of the arms includes a first recessed portion that is recessed such that a distance between the inner surfaces of the arms increases from a start point located closer to an opening edge of the support hole toward an end point located closer to the base end of the arm, and includes a curved second recessed portion that connects the end point and an end surface of the flange together, as seen in a third direction orthogonal both to the first direction and to the second direction.

2. The universal joint yoke according to claim 1, wherein
the outer surface of each of the arms includes a projecting portion located on a back side of the first recessed portion and the second recessed portion so as to project outward as seen in the third direction.

3. The universal joint yoke according to claim 1 or 2, wherein
the first recessed portion and the second recessed portion are formed of one of a forging surface, a casting surface, or a resin molding surface.

4. An intermediate shaft in which a first yoke of at least one universal joint of a pair of universal joints is formed using the universal joint yoke according to any one of claims 1 to 3, the intermediate shaft comprising:
a telescopic middle shaft; and
the pair of universal joints provided at a pair of axial ends of the middle shaft, wherein
each of the universal joints includes a first yoke having a tubular portion to which a corresponding shaft is coupled, a second yoke to which a corresponding end of the middle shaft is coupled, and a joint spider that couples the first yoke and the second yoke together.
